(19) Europäisches Patentamt
European Patent Office
Office européen des brevets

(11) **EP 2 267 704 A1**

(12) **EUROPEAN PATENT APPLICATION**

(43) Date of publication:
**29.12.2010 Bulletin 2010/52**

(51) Int Cl.:
***G11B 7/09*** *(2006.01)*       ***G11B 7/135*** *(2006.01)*
***G11B 7/24*** *(2006.01)*

(21) Application number: **10166056.1**

(22) Date of filing: **15.06.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **22.06.2009 JP 2009147836**

(71) Applicant: **Sony Corporation
Minato-ku
Tokyo 108-0075 (JP)**

(72) Inventors:
• **Saito, Kimihiro**
  **Minato-Ku Tokyo (JP)**
• **Tanabe, Norihiro**
  **Minato-Ku Tokyo (JP)**
• **Tashiro, Shiori**
  **Minato-Ku Tokyo (JP)**

(74) Representative: **Mills, Julia
D Young & Co LLP
120 Holborn
London EC1N 2DY (GB)**

(54) **Optical pickup and optical disc device**

(57)     A simpler optical pickup is disclosed for focus control for an optical disc in which a fluorescent recording material is used for a recording layer. The optical disc further comprises a reflecting section adjacent to the recording layer, the recording layer generating, according to presence or absence of a recording mark representing information, a reproduction light beam having wavelength different from that of the incident light beam, and the reflecting section reflecting the light beam. The optical pickup (36) includes: a single light source (41) that emits a light beam (L1); an object lens (47) that focuses the light beam on said optical disc (100), a wavelength selecting element (44) that separates, from the reproduction light beam (L3), a reflected light beam (L2) reflected by the reflecting section of the optical disc and having wavelength equivalent to that of the light beam (L1); and a reflected light detector (50) that receives the reflected light beam separated by the wavelength selecting element and generates a position detection signal.

*FIG.5*

CONFIGURATION (1) OF OPTICAL PICKUP

EP 2 267 704 A1

**Description**

The present invention relates to an optical pickup and an optical disc device and is suitably applied to, for example, an optical disc device that records information on a recording medium using a light beam and reproduces the information from the recording medium using a light beam.

In the past, an optical disc device is widely spread that irradiates a light beam on an optical disc such as a CD (Compact Disc), a DVD (Digital Versatile Disc), or a blue-ray Disc (registered trademark; hereinafter referred to as BD) and reads reflected light of the light beam to thereby reproduce information.

Such an optical disc device records, on the optical disc, various kinds of information such as various contents including music contents and video contents and various data for a computer. In particular, in recent years, an amount of information increases because of high definition of video, high sound quality of music, and the like and an increase in the number of contents recorded on one optical disc is requested. Therefore, there is a demand for a further increase in a capacity of the optical disc.

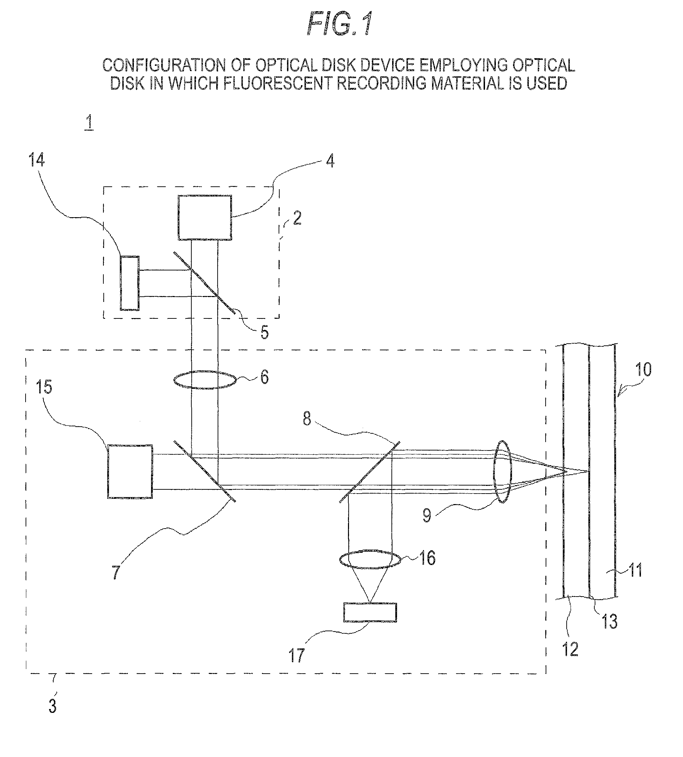

Therefore, an optical disc device 1 employing an optical disc 10 as a volume recording medium, in which a fluorescent recording material is used for a recording layer, shown in Fig. 1 is examined (see, teradisc technology. [online]. mempile, inc. [retrieved on 2009-06-01]. Retrieved from the Internet:

<URL:
http://www.mempile.com/TeraDisc2.261264E+289284A2+Technolo gy/>.)

The optical disc device 1 includes a servo optical system 2 for servo control and an information optical system 3 for recording or reproduction of information.

The optical disc device 1 causes a servo laser diode 4 of the servo optical system 2 to emit an infrared light beam formed of a laser beam having wavelength of about 780 [nm] and irradiates the infrared light beam on the optical disc 10 via a beam splitter 5, a relay lens 6, a first dichroic mirror 7, a second dichroic mirror 8, and an object lens 9.

The first dichroic mirror 7 has so-called wavelength selectivity, i.e., has different transmittance and reflectance depending on wavelength of a light beam. The first dichroic mirror 7 reflects the infrared light beam at a ratio of about 100 [%] and transmits light beams having other wavelengths at a ratio of about 100 [%]. Therefore, the first dichroic mirror 7 reflects the infrared light beam.

The second dichroic mirror 8 transmits a red light beam and the infrared light beam at a ratio of about 100 [%] and reflects light beams having other wavelengths at a ratio of about 100 [%]. Therefore, the second dichroic mirror 8 transmits the infrared light beam.

The optical disc 10 includes a substrate 11, a recording layer 12 for recording information, and a reflective film 13 that reflects a light beam.

The recording layer 12 is formed of a fluorescent recording material. When a light beam having high light intensity is irradiated on the recording layer 12, a photochemical reaction occurs near the focus of the light beam and fluorescent light tends to be emitted, whereby a recording mark is formed on the recording layer 12. When the light beam is irradiated on a place where the photochemical reaction occurs on the recording layer 12, a light beam having wavelength different from that of the irradiated light beam is generated.

Subsequently, the optical disc device 1 makes a reflected light beam reflected from the reflective film 13 of the optical disc 10 incident on the beam splitter 5 via the object lens 9, the second dichroic mirror 8, the first dichroic mirror 7, and the relay lens 6.

The beam splitter 5 reflects a part of the reflected light beam and irradiates the part of the reflected light beam on a servo photodetector 14. The servo photodetector 14 has a detection area and generates a detection signal according to a detected amount of light.

The optical disc device 1 causes, on the basis of the detection signal, a not-shown actuator to move the object lens 9 and performs tracking control and focus control.

In recording information, the optical disc device 1 causes a laser diode 15 of the information optical system 3 to emit a red light beam having high light intensity and wavelength of about 660 [nm]. The optical disc device 1 irradiates the red light beam on the recording layer 11 of the optical disc 10 via the first dichroic mirror 7, the second dichroic mirror 8, and the object lens 9 to form a recording mark on the recording layer 11.

On the other hand, in reproducing the information, the optical disc device 1 causes the laser diode 15 of the information optical system 3 to emit a red light beam having light intensity lower than that in the recording. The optical disc device 1 irradiates the red light beam on the recording layer 11 of the optical disc 10 via the first dichroic mirror 7, the second dichroic mirror 8, and the object lens 9.

When a light beam is irradiated on the recording mark, the recording layer 11 generates a reproduction light beam having wavelength different from that of the irradiated light beam.

The optical disc device 1 makes the reproduction light beam incident on the second dichroic mirror 8 via the object lens 9. The second dichroic mirror 8 reflects the reproduction light beam having wavelength different from that of the red light beam, condenses the reproduction light beam with a condenser lens 16, and makes the reproduction light beam incident on a reproduction photodetector 17.

The photodetector 17 has a detection area and generates a reproduction detection signal according to a detected amount of light.

The optical disc device 1 applies, on the basis of the reproduction detection signal, predetermined demodulation processing, decoding processing, or the like to the reproduction detection signal to thereby generate reproduction information.

As shown in Fig. 1, the optical disc device 1 includes, separately from the information optical system 3 for recording or reproduction of information, the servo optical system 2 in order to perform servo control such as focus control.

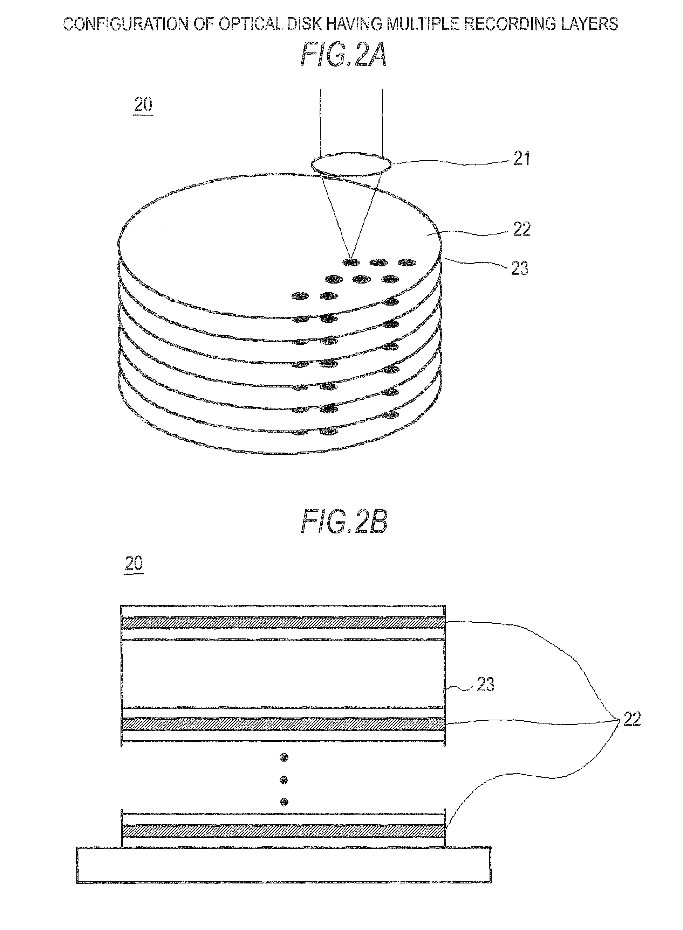

On the other hand, as one of methods of increasing a capacity of an optical disc, an optical disc 20 having multiple recording layers shown in Figs. 2A and 2B is also examined. The optical disc 20 has a structure in which a recording layer 22 on which a recording mark is formed by a light beam condensed by an object lens 21 is sandwiched by intermediate layers 23. (See, Y. Kawata et al. , "Three-dimensional optical data storage using three-dimensional optics," Optical Engineering, Vol. 40, 2001, p. 2247 to 2254)

The recording layer 22 of the optical disc 20 is configured by a material whose refractive index changes by means of irradiation with the laser beam for recording and the recording mark is formed by the change in the refractive index near a focus of the light beam for recording.

However, in an optical disc device employing such an optical disc 20, as in the optical disc device 1 (Fig. 1), a servo optical system is necessary separately from an information optical system for recording and reproduction of information in order to perform servo control such as focus control. Therefore, in the optical disc device employing the optical disc 20, the structure of the device is complicated.

Therefore, it is desirable to provide an optical pickup and an optical disc device that apply, with a simple configuration, focus control to an optical disc in which a fluorescent recording material is used for a recording layer.

Various respective aspects and features of the invention are defined in the appended claims. Combinations of features from the dependent claims may be combined with features of the independent claims as appropriate and not merely as explicitly set out in the claims.

According to an embodiment of the present invention, there is provided an optical disc device including: a light source that emits a light beam; an object lens that focuses the light beam on an optical disc having a recording layer formed of a fluorescent recording material and a reflecting section adjacent to the recording layer, the recording layer generating, according to presence or absence of a recording mark representing information, a reproduction light beam having wavelength different from that of the light beam when the light beam is irradiated thereon from the light beam, and the reflecting section reflecting the light beam; a wavelength selecting element that separates, from the reproduction light beam, a reflected light beam reflected by the reflecting section of the optical disc and having wavelength equivalent to that of the light beam; a reflected light detector that receives the reflected light beam separated by the wavelength selecting element and generates a position detection signal; a signal processing unit that generates, on the basis of the position detection signal, a focus error signal representing deviation between the focus of the light beam and the recording layer with respect to an optical axis direction of the light beam; and a lens moving unit that moves, on the basis of the focus error signal, the object lens in a direction separating from and approaching the optical disc.

The optical disc device can perform focus control on the basis of a light beam emitted from a light source same as the light source that emits the light beam for reproducing the information recorded on the optical disc.

According to the embodiment of the present invention, it is possible to perform focus control on the basis of a light beam emitted from a light source same as the light source that emits the light beam for reproducing the information recorded on the optical disc. Therefore, the present invention can realize an optical pickup and an optical disc device that apply, with a simple configuration, focus control to an optical disc in which a fluorescent recording material is used for a recording layer.

Embodiments of the invention will now be described with reference to the accompanying drawings, throughout which like parts are referred to by like references, and in which:

Fig. 1 is a schematic diagram of the configuration of an optical disc device employing an optical disc in which a fluorescent recording material is used;

Figs. 2A and 2B are schematic diagrams of the configuration of an optical disc having multiple recording layers;

Figs. 3A and 3B are schematic diagrams of the configuration of an optical disc according to an embodiment of the present invention;

Fig. 4 is a schematic diagram of the overall configuration of an optical disc device according to the embodiment;

Fig. 5 is a schematic diagram of the configuration (1) of an optical pickup according to the embodiment;

Fig. 6 is a schematic diagram of the configuration of a detection area in a photodetector according to the embodiment;

Fig. 7 is a schematic diagram of the configuration (2) of the optical pickup according to the embodiment; and

Fig. 8 is a schematic diagram of the configuration of an optical pickup according to another embodiment of the present invention.

Modes for carrying out the present invention (hereinafter referred to as embodiments) are explained below. The embodiments are explained in the following order.

1. Embodiment

2. Another embodiment

<1. Embodiment>

[1-1. Configuration of an optical disc]

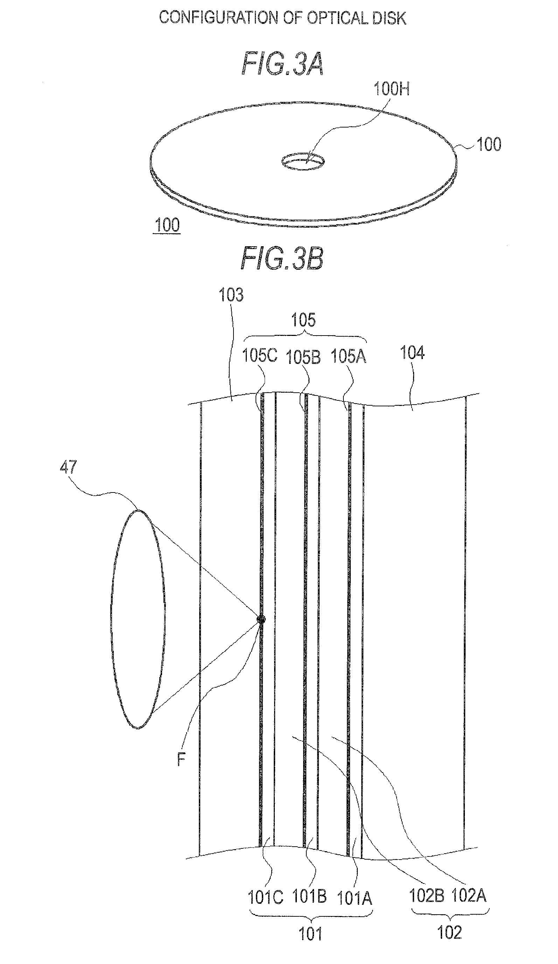

First, an optical disc 100 used as an optical information recording medium in an embodiment of the present invention is explained. As shown in an external view of Fig. 3A, the optical disc 100 as a whole is formed in a disc shape having a diameter of about 120 [mm] like a CD, a DVD, and a BD in the past. A hole 100H is formed in the center of the optical disc 100.

As shown in a sectional view of Fig. 3B, in the optical disc 100, recording layers 101 for recording information and intermediate layers 102 as spacers are alternately superimposed. The recording layers 101 and the intermediate layers 102 are sandwiched from both sides by substrates 103 and 104.

The substrates 103 and 104 are formed of a material such as polycarbonate or glass. The substrates 103 and 104 transmit light made incident from one side to the opposite side at high transmittance. The substrates 103 and 104 have certain degree of strength to play a role of protecting the recording layers 101 and the intermediate layers 102.

Like the substrates 103 and 104, the intermediate layers 102 transmit light made incident from one side to the opposite side at high transmittance.

The recording layer 101 is formed of a fluorescent recording material. When a light beam having high light intensity is irradiated thereon, a two-photon absorption reaction occurs near a focus of the light beam, the fluorescent recording material tends to emit fluorescent light, and a recording mark is formed thereon. The recording layer 101 reacts to a blue light beam having wavelength of about 405 [nm].

When the blue light beam is irradiated on the recording mark, the recording layer 101 generates a reproduction light beam having wavelength larger than that of the blue light beam according to so-called Stokes shift.

In the optical disc 100, reflective films 105 as reflection layers are formed on boundary surfaces between the recording layers 101 and the intermediate layers 102 and on the substrate 103 side of one sides of the recording layers 101. The reflective films 105 are formed of dielectric multilayer films or the like not having wavelength selectivity and reflect an irradiated light beam at a ratio of, for example, 1 [%].

In the reflective film 105, guide grooves for tracking servo are formed. Specifically, spiral tracks are formed by lands and grooves same as those of a general BD-R (Recordable) disc. Addresses of serial numbers are given to the tracks for respective predetermined recording units such that a track where information is recorded or reproduced can be specified by the address.

In the reflective film 105 (i.e., the boundary surface between the recording layer 101 and the intermediate layer 102), a pit or the like may be formed instead of the guide groove or the guide groove and the pit or the like may be combined.

When a light beam is irradiated thereon from the substrate 103 side, the reflective film 105 reflects the light beam to the substrate 103 side. The light beam reflected by the reflective film 105 is hereinafter referred to as reflected light beam.

For example, it is assumed that, in an optical disc device, the reflected light beam is used for position control (i.e., focus control and tracking control) for a predetermined object lens 47 in order to set a focus F of a light beam condensed by the object lens 47 on a track as a target (hereinafter referred to as target track).

In practice, when information is recorded on the optical disc 100 the blue light beam is condensed by the object lens 47 subjected to the position control and is focused on a target track of a reflective film 105C.

When the blue light beam is a light beam L1 having light intensity used during recording processing, in a recording layer 101C adjacent to the reflective film 105C in a direction away from the object lens 47, the two-photon absorption reaction occurs in a portion where the light beam L1 is condensed to have intensity equal to higher than predetermined intensity (i.e., around the focus F) and a recording mark is formed.

In the optical disc 10 as the volume recording medium shown in Fig. 1, the infrared light beam for performing the servo control is focused on the reflective film 13. On the other hand, the red light beam for performing recording or reproduction of information is focused in the recording layer 12 at a predetermined distance in the optical axis direction from the focus of the infrared light beam. In this way, in the optical disc 10, focus positions of the light beams are different for the servo control and the recording or reproduction of information.

On the other hand, in the optical disc 100, the reflective films 105 are respectively adjacent to the recording layers 101. When a light beam is focused on the reflective film 105, the light beam can be regarded as being also focused on the recording layer 101 adjacent to the reflective film 105.

In the optical disc 100, when information is reproduced, as in the recording of the information, the object lens 47 is subjected to the position control such that the light beam L1 formed of the blue light beam and condensed by the object lens 47 is focused on a target track of the reflective film 105C (i.e., the recording layer 101C).

The recording mark recorded in the position of the focus F tends to generate fluorescent light and generates a reproduction light beam having wavelength larger than that of the blue light beam.

On the other hand, when the light beam L1 formed of the blue light beam is irradiated on a place where the recording mark is not recorded (i.e., an unrecorded portion), a reproduction light beam is not generated.

In this way, in the optical disc 100, when recording information is reproduced, the light beam L1 formed of the blue light beam is reflected by the reflective film 105 and changed to a reflected light beam L2. A reproduction light beam having wavelength larger than that of the light beam L1 is generated from the recording mark of the recording layer 101 corresponding to the reflective film 105.

[1-2. Configuration of an optical disc device]

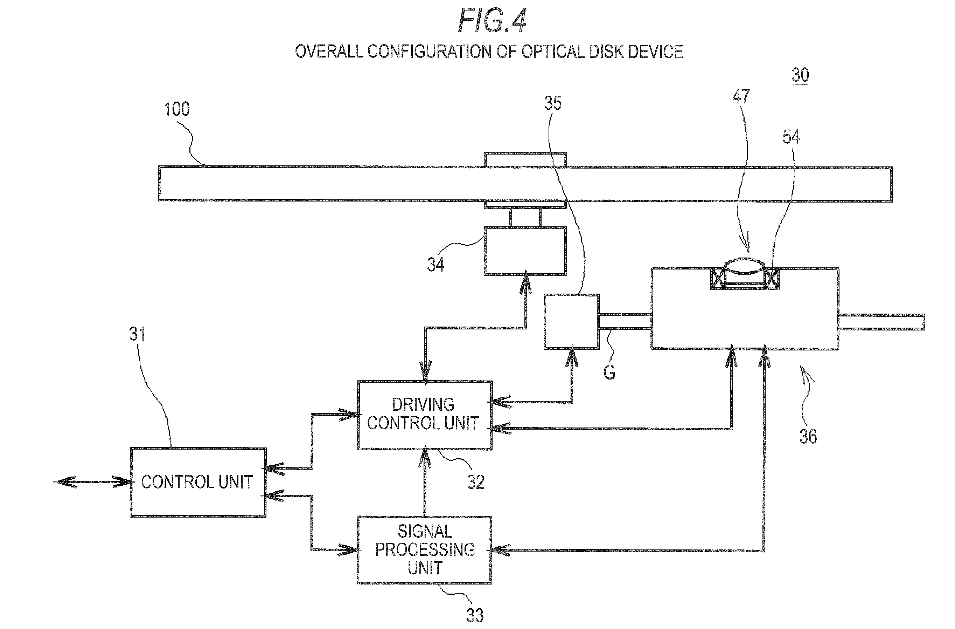

An optical disc device 30 corresponding to the optical disc 100 is explained below. As shown in Fig. 4, the entire optical disc device 30 is collectively controlled by a control unit 31.

The control unit 31 includes a not-shown CPU (Central Processing Unit) as a main unit. The control unit 31 reads out various computer programs such as a basic program and an information recording program from a not-shown ROM (Read Only Memory) and expands the computer programs on a not-shown RAM (Random Access Memory) to thereby execute various kinds of processing such as information recording processing.

For example, when the control unit 31 receives an information recording command, recording information, and recording address information from a not-shown external apparatus or the like in a state in which the optical disc 100 is inserted, the control unit 31 supplies a driving command and the recording address information to a driving control unit 32 and supplies the recording information to the signal processing unit 33. The recording address information is information indicating an address where the recording information should be recorded among addresses given to the reflective films 105 of the optical disc 100.

The driving control unit 32 controls to drive a spindle motor 34 according to the driving command to thereby rotate the optical disc 100 at predetermined rotation speed. At the same time, the driving control unit 32 controls to drive a thread motor 35 to thereby move an optical pickup 36 to a position corresponding to the recording address information in the radial direction (i.e., the inner circumferential direction or the outer circumferential direction) of the optical disc 100 along a moving axis G.

The signal processing unit 33 applies various kinds of signal processing such as predetermined encoding processing and modulation processing to the supplied recording information to thereby generate a recording signal and supplies the recording signal to the optical pickup 36.

The optical pickup 36 performs the focus control and the tracking control on the basis of the control by the driving control unit 32 to thereby set an irradiation position of the light beam L1 on a track (a target track) indicated by the recording address information on the reflective film 105 of the optical disc 100. Consequently, the optical pickup 36 records a recording mark corresponding to the recording signal from the signal processing unit 33 on the recording layer 101 corresponding to the reflective film 105.

When the control unit 31 receives an information reproduction command and reproduction address information indicating an address of the recording information from, for example, an external apparatus (not shown), the control unit 31 supplies a driving command to the driving control unit 32 and supplies a reproduction processing command to the signal processing unit 33.

As in the recording of information, the driving control unit 32 controls to drive the spindle motor 34 to thereby rotate the optical disc 100 at the predetermined rotation speed and controls to drive the thread motor 35 to thereby move the optical pickup 36 to a position corresponding to the reproduction address information.

The optical pickup 36 performs the focus control and the tracking control on the basis of the control by the driving control unit 32 to thereby set an irradiation position of the light beam L1 on a track (a target track) indicated by the reproduction address information on the reflective film 105 of the optical disc 100 and irradiates a predetermined light amount of the light beam L1. The optical pickup 36 detects a reproduction light beam generated from the recording mark of the recording layer 101 in the optical disc 100 and supplies a detection signal corresponding to a light amount of the reproduction light beam to the signal processing unit 33.

In the following explanation, a recording layer as a target of recording or reproduction by the optical disc device 30 and a reflective film (e.g., the recording layer 101C and the reflective film 105C) corresponding to the recording layer are collectively referred to as recording target layer 100T as well.

The signal processing unit 33 applies various kinds of signal processing such as predetermined demodulation processing and decoding processing to the supplied detection signal to thereby generate reproduction information and supplies the reproduction information to the control unit 31. The control unit 31 transmits the reproduction information to the external apparatus (not shown).

In this way, the optical disc device 30 controls the optical pickup 36 with the control unit 31 to thereby record information in a target track on the recording target layer 100T of the optical disc 100 and reproduce the information from the target track.

[1-3. Configuration of the optical pickup]

[1-3-1. Focus control and tracking error control]

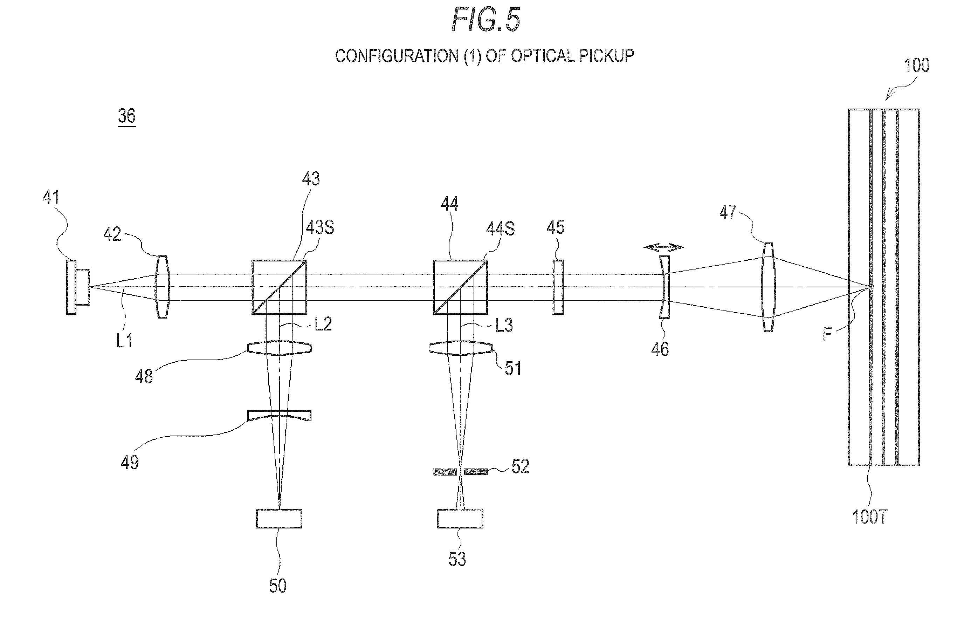

The configuration of the optical pickup 36 shown in Fig. 5 is explained below. The recording target layer 100T includes the recording layer 101C and the reflective film 105C.

A laser diode 41 can emit the blue laser beam having wavelength of about 405 [nm]. In practice, the laser diode 41 emits a predetermined light amount of the laser beam L1 formed of a diverging ray on the basis of the control by the control unit 31 (Fig. 4) and makes the light beam L1 incident on a collimator lens 42. The collimator lens 42 converts the light beam L1 from the diverging ray into parallel rays and makes the light beam L1 incident on a polarization beam splitter 43.

The polarization beam splitter 43 reflects a light beam on or transmits the light beam through a reflecting/transmitting surface 43S at a different ratio depending on a polarizing direction of the light beam. For example, the reflecting/transmitting surface 43S transmits a light beam of p-polarized light at a ratio of about 100 [%] and reflects a light beam of s-polarized light at a ratio of about 100 [%].

In practice, the polarization beam splitter 43 directly transmits the light beam L1 formed of p-polarized light through the reflecting/transmitting surface 43S and makes the light beam L1 incident on a dichroic prism 44.

A reflecting/transmitting surface 44S of the dichroic prism 44 has so-called wavelength selectivity, i.e., has different transmittance and reflectance depending on wavelength of a light beam. The reflecting/transmitting surface 44S transmits the blue light beam at a ratio of about 100 [%] and reflects light beams having other wavelengths at a ratio of about 100 [%]. Therefore, the dichroic prism 44 transmits the light beam L1 though the reflecting/transmitting surface 44S and makes the light beam L1 incident on a quarter-wave plate 45.

The quarter-wave plate 45 converts the light beam L1 from linear polarized light into, for example, left circularly polarized light and makes the light beam L1 incident on a relay lens 46. The relay lens 46 converts the light beam L1 from the parallel rays into a diverging ray and makes the light beam L1 incident on the object lens 47.

The relay lens 46 is moved in the optical axis direction of the light beam L1 by a not-shown actuator. In practice, the relay lens 46 is moved by the actuator on the basis of the control by the control unit 31 (Fig. 4) to thereby change a diverging state of the emitted light beam L1. Consequently, the relay lens 46 can give the light beam L1 in advance spherical aberration having a characteristic opposite to spherical aberration that occurs when the light beam L1 is condensed and reaches the target track of the optical disc 100 and correct the spherical aberration when the light beam L1 reaches the target track.

The object lens 47 condenses the light beam L1 and irradiates the light beam L1 on the recording target layer 100T. As shown in Fig. 3B, the light beam L1 is transmitted through the substrate 103 and a part thereof is reflected on the reflective film 105C of the recording target layer 100T, travels in the opposite direction of the light beam L1, and changes to the reflected light beam L2 formed of right circularly polarized light in a polarizing direction thereof.

The reflected light beam L2 is converted into a converging ray by the object lens 47 and then made incident on the quarter-wave plate 45 via the relay lens 46. The quarter-wave plate 45 converts the reflected light beam L2 formed of the right circularly polarized light into s-polarized light and makes the reflected light beam L2 incident on the dichroic prism 44.

The dichroic prism 44 transmits the reflected light beam L2 formed of blue light through the reflecting/transmitting surface 44S and makes the reflected light beam L2 incident on the polarization beam splitter 43. The polarization beam splitter 43 reflects the reflected light beam L2 formed of the s-polarized light and makes the reflected light beam L2 incident on a condenser lens 48.

The condenser lens 48 condenses the reflected light beam L2 and, after giving astigmatism to the reflected light beam L2 with a cylindrical lens 49, irradiates the reflected light beam L2 on a servo photodetector 50.

In the optical pickup 36, optical positions of the various optical components are adjusted such that a focus state at the time when the light beam L1 is condensed by the object lens 47 and irradiated on the recording target layer 100T of the optical disc 100 is reflected on a focus state at the time when the reflected light beam L2 is condensed by the condenser lens 48 and irradiated on the servo photodetector 50.

The object lens 47 can be driven by a biaxial actuator 54 (Fig. 4) in two axis directions, i.e., a focus direction as an approaching direction to or a separating direction from the optical disc 100 and a tracking direction as an inner circumferential side direction or an outer circumferential side direction of the optical disc 100.

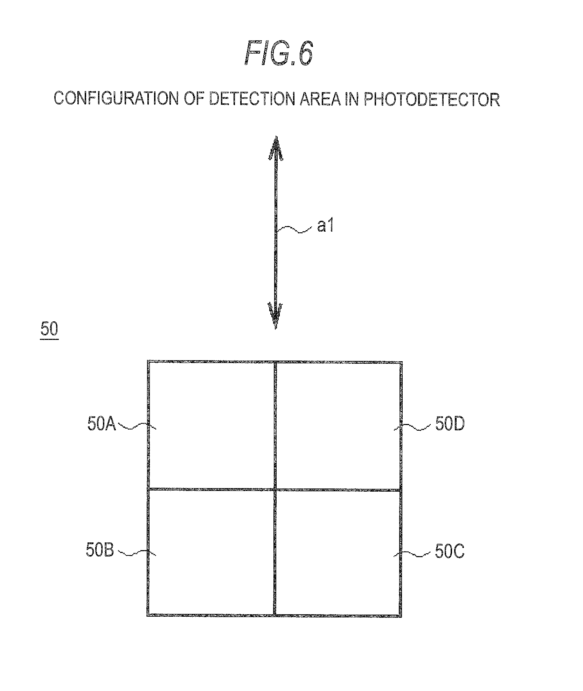

As shown in Fig. 6, the servo photodetector 50 has, on a surface on which the reflected light beam L2 is irradiated, four detection areas 50A, 50B, 50C, and 50D divided in a lattice shape. A direction indicated by an arrow a1 (a vertical direction in the figure) corresponds to a traveling direction of a track at the time when the light beam L1 is irradiated on the reflective film 105 (Fig. 3B).

The servo photodetector 50 detects parts of the reflected light beam L2 respectively with the detection areas 50A, 50B, 50C, and 50D, generates position detection signals SDA, SDB, SDC, and SDD respectively according to amounts of light detected at this point and sends the position detection signals SDA, SDB, SDC, and SDD to the signal processing unit 33 (Fig. 4).

The signal processing unit 33 performs focus control by so-called astigmatism. The signal processing unit 33 calculates a focus error signal SFE according to the following Formula (1) and supplies the focus error signal SFE to the driving control unit 32.

$$SFE = (SDA + SDC) - (SDB + SDD) \qquad \cdots\cdots (1)$$

The focus error signal SFE represents an amount of deviation in the optical axis direction of the light beam L1 between the focus F of the light beam L1 and the recording target layer 100T of the optical disc 100. When the light beam L1 is defocused from the target track in the focus direction, a shape of a spot of the light beam L1 irradiated on the servo photodetector 50 changes according to a defocus amount.

The signal processing unit 33 performs tracking control by a so-called push-pull method. The signal processing unit 33 calculates a tracking error signal STE according to the following Formula (2) and supplies the tracking error signal STE to the driving control unit 32.

$$STE = (SDA + SDB) - (SDC + SDD) \qquad \cdots\cdots (2)$$

The tracking error signal STE represents an amount of deviation in the radial direction between the focus F and the target track in the recording target layer 100T of the optical disc 100.

The driving control unit 32 generates a focus driving signal SFD on the basis of the focus error signal SFE and supplies the focus driving signal SFD to the biaxial actuator 54 to thereby feedback-control (i.e., focus-control) the object lens 47 such that the light beam L1 is focused on the recording target layer 100T of the optical disc 100.

The driving control unit 32 generates a tracking driving signal STD on the basis of the tracking error signal STE and supplies the tracking driving signal STD to the biaxial actuator 54 to thereby feedback-control (i.e., tracking-control) the object lens 47 such that the light beam L1 is focused on the target track in the recording target layer 100T of the optical disc 100.

In this way, the optical pickup 36 irradiates the light beam L1 on the recording target layer 100T of the optical disc 100 and supplies a light reception result of the reflected light beam L2, which is the reflected light of the light beam L1, to the signal processing unit 33. According to the light reception result, the driving control unit 32 performs the focus control and the tracking control of the object lens 47 to focus the light beam L1 on the target track of the recording target layer 100T.

[1-3-2. Recording of information on the optical disc]

In recording information on the optical disc 100, as explained above, when the control unit 31 (Fig. 4) of the optical disc device 30 receives an information recording command, recording information, and recording address information from an external apparatus (not shown) or the like, the control unit 31 supplies a driving command and the recording address information to the driving control unit 32 and supplies the recording information to the signal processing unit 33.

The driving control unit 32 causes the laser diode 41 of the optical pickup 36 to irradiate, on the optical disc 100, the light beam L1 formed of the blue light having light intensity lower than light intensity during recording processing. The driving control unit 32 performs the focus control and the tracking control (i.e., the position control) of the object lens 47 on the basis of a detection result of the reflected light beam L2, which is the reflected light of the light beam L1, to thereby cause the focus F of the light beam L1 to follow a target track corresponding to the recording address information.

Subsequently, the driving control unit 32 causes the laser diode 41 of the optical pickup 36 to emit the laser beam L1 formed of the blue light having high light intensity.

The light beam L1 is focused on the target track of the optical disc 100 via the collimator lens 42, the polarization beam splitter 43, the dichroic prism 44, the quarter-wave plate 45, the relay lens 46, and the object lens 47.

As explained above, in the optical disc 100, the recording target layer 100T can be regarded as integrally including the recording layer 101 and the reflective film 105 adjacent to the recording layer 101. Therefore, even if the focus F of the light beam L1 is present on the reflective film 105, a recording mark can be formed within the recording layer 101 corresponding to the reflective film 105.

In the recording layer 101, the two-photon absorption reaction occurs in a portion where the light beam L1 is condensed and has intensity equal to or larger than the predetermined intensity (i.e., around the focus F) and fluorescent light tends to be generated, whereby a recording mark is formed.

The signal processing unit 33 (Fig. 4) generates, on the basis of the recording information supplied from the external apparatus (not shown), for example, a recording signal representing binary data of a value "0" or "1". According to the recording signal, for example, the laser diode 41 emits the light beam L1 when the recording signal is the value "1" and does not emit the light beam L1 when the recording signal is the value "0".

In this way, the optical disc device 30 forms a recording mark in the recording layer 101 of the optical disc 100 when the recording signal is the value "1" and does not form the recording mark when the recording signal is the value "0".

Consequently, the optical disc 30 can record the value "1" or "0" of the recording signal in the position of the focus F according to presence or absence of the recording mark. As a result, the optical disc 30 can record the recording information on the recording layer 101 of the optical disc 100.

[1-3-3. Reproduction of information from the optical disc]

In reproducing information from the optical disc 100, the control unit 31 (Fig. 4) of the optical disc device 30 causes the laser diode 41 of the optical pickup 36 to irradiate the laser beam L1 formed of the blue light on the optical disc 100.

The light beam L1 is focused on the target track of the optical disc 100 via the collimator lens 42, the polarization beam splitter 43, the dichroic prism 44, the quarter-wave plate 45, the relay lens 46, and the object lens 47.

The control unit 31 causes, on the basis of a detection result of the reflected light beam L2 formed of the blue light reflected by the reflection layer 105, the driving control unit 32 to perform the focus control and the tracking control (i.e., the position control) of the object lens 47.

If a recording mark is formed on the target track of the recording layer 101 corresponding to the reflection layer 105 at this point, since the recording mark tends to generate fluorescent light according to an irradiated light beam, the recording mark generates a reproduction light beam L3 having wavelength larger than that of the light beam L1.

The reproduction light beam L3 is made incident on the dichroic prism 44 via the object lens 47, the relay lens 46, and the quarter-wave plate 45.

The reflecting/transmitting surface 44S of the dichroic prism 44 reflects light beams having wavelengths other than that of the blue light at a ratio of about 100 [%]. Therefore, the dichroic prism 44 reflects the reproduction light beam L3 on the reflecting/transmitting surface 44S and makes the reproduction light beam L3 incident on a condenser lens 51.

The condenser lens 51 condenses the reproduction light beam L3 and irradiates the reproduction light beam L3 on a reproduction photodetector 53 via a pinhole plate 52.

The pinhole plate 52 has a hole and is arranged to locate a focus of the reproduction light beam L3 in the hole. Therefore, the pinhole plate 52 causes the reproduction light beam L3 to directly pass through.

Therefore, the pinhole plate 52 generally blocks light having a different focus (hereinafter referred to as stray light LN) reflected from, for example, the surface of the substrate 103 in the optical disc 100 or a recording mark in a position different from the target track.

A detection area is provided in the reproduction photodetector 53. The reproduction photodetector 53 detects the reproduction light beam L3 with the detection area, generates a reproduction detection signal according to an amount of detected light, and sends the reproduction detection signal to the signal processing unit 33 (Fig. 4).

In this way, the control unit 31 of the optical disc device 30 causes the recording mark recorded in the recording layer 101 of the optical disc 100 to generate the reproduction light beam L3 having wavelength different from that of the light beam L1 and receives the reproduction light beam L3. Consequently, the control unit 31 can detect that the recording mark is recorded.

When the recording mark is not recorded in the position of the focus F, i.e., the target track, since the reproduction light beam L3 is not generated from the position of the focus F, the optical disc device 30 generates, with the optical pickup 36, a reproduction detection signal indicating that the reproduction light beam L3 is not received.

The signal processing unit 33 recognizes, on the basis of the reproduction detection signal, detection or non-detection of the reproduction light beam L3 as the value "1" or "0" and generates reproduction information on the basis of a result of the recognition.

In this way, the optical disc device 30 receives the reproduction light beam L3 when a recording mark is formed in the position of the focus F (the target track) in the recording layer 101 of the optical disc 100 and does not receive the reproduction light beam L3 when the recording mark is not formed.

Consequently, the optical disc device 30 can recognize which of the values "1" and "0" is recorded in the position of the focus F. As a result, the optical disc device 30 can reproduce information recorded on the recording layer 101 of the optical disc 100.

[1-4. Operation and effect]

In the configuration explained above, in reproducing information from the optical disc 100, the control unit 31 of the optical disc device 30 causes the laser diode 41 to irradiate the light beam L1 formed of the blue light on the recording target layer 100T of the optical disc 100.

The reflected light beam L2 reflected by the reflective film 105 in the recording target layer 100T and having wavelength same as that of the light beam L1 is transmitted through the dichroic prism 44, reflected by the polarization beam splitter 43, and made incident on the servo photodetector 50.

The control unit 31 performs the focus control and the tracking control of the object lens 47 on the basis of a detection result of the reflected light beam L2 and causes the focus F of the light beam L1 to follow the target track.

When the light beam L1 is irradiated on the recording mark formed on the recording layer 101 in the recording target layer 100T, the recording mark generates the reproduction light beam L3 having wavelength larger than that of the light beam L1.

The reproduction light beam L3 is made incident on the dichroic prism 44, reflected by the reflecting/transmitting surface 44S that reflects light beams having wavelengths other than that of the blue light at a ratio of about 100 [%], and made incident on the reproduction photodetector 53 via the condenser lens 51.

The signal processing unit 33 of the optical disc device 30 generates reproduction information on the basis of the reproduction detection signal generated by the reproduction photodetector 53.

Consequently, the optical disc device 30 can separate the reproduction light beam L3, which has a light amount smaller than that of the reflected light beam L2, from the reflected light beam L2 and reproduce the information recorded on the optical disc 100 at high accuracy.

In the optical disc 10 as the volume recording medium shown in Fig. 1, the position of the reflective film 13 for performing the servo control and the position of the recording layer 12 for performing the recording of information are apart from each other. Therefore, the optical disc device 1 needs to focus light beams respectively on the reflective film 13 and the recording layer 12.

Therefore, the optical disc device 1 separates two focuses of an infrared light beam for performing the servo control and a red light beam for performing the reproduction of information by a certain distance.

On the other hand, in the optical disc 100, the reflective films 105 are adjacent to the respective recording layers 101. When a light beam is focused on the reflective film 105, the light beam can be regarded as being also focused on the recording layer 101 corresponding to the reflective film 105.

Therefore, the optical disc device 30 can perform the servo control and the reproduction of information simply by setting the focus F of the light beam L1 on the recording target layer 105.

Consequently, in the optical disc device 30, it is unnecessary to provide plural laser diodes for focusing laser beams on different positions for the servo control and the reproduction of information. It is possible to perform the servo control with a simple configuration.

If the reflective films 105 are not provided in the optical disc 100, in reproducing information from the optical disc 100, it is also conceivable that the optical disc device 30 performs the focus control on the basis of the reproduction light beam L3 generated from the recording layer 101.

However, when the reproduction light beam L3 generated from the recording layer 101 formed of the fluorescent recording material is defocused from the target track in the focus direction, in some case, a shape of a spot of the reproduction light beam L3 irradiated on the servo photodetector 50 does not change according to a defocus amount. Therefore, it is likely that the optical disc device 30 may not be able to stably perform the focus control.

On the other hand, the optical disc device 30 can stably perform the focus control by using the reflected light beam L2 reflected by the reflective film 105, a shape of a spot of which irradiated on the servo photodetector 50 changes according to a defocus amount.

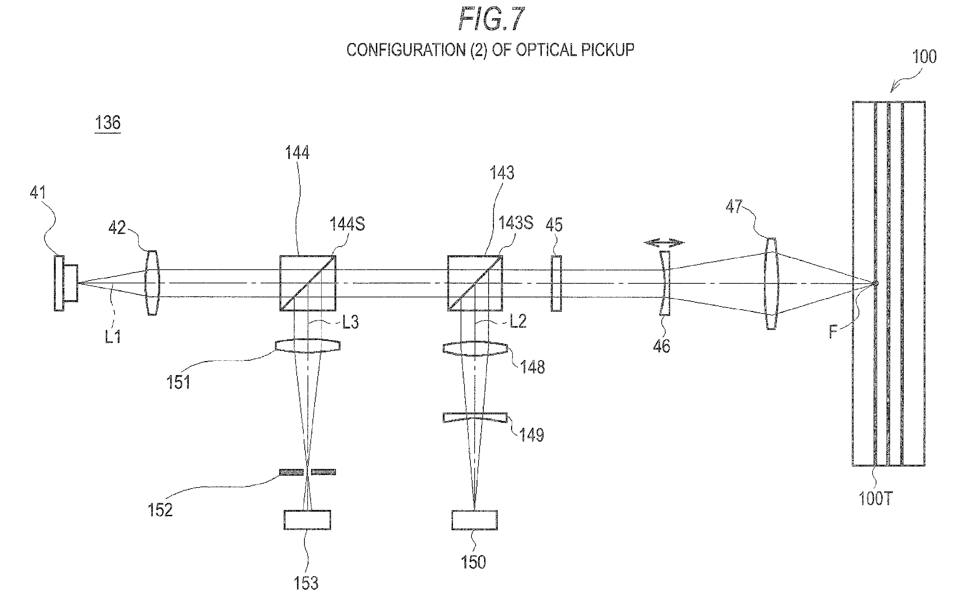

The dichroic prism 44 in the optical pickup 36 is arranged such that the reproduction light beam L3 is made incident thereon earlier than the polarization beam splitter 43. For comparison with the optical pickup 36, a virtual optical pickup 136 shown in Fig. 7 is examined.

Compared with the optical pickup 36, the optical pickup 136 includes a dichroic prism 144, a condenser lens 151, a pinhole plate 152, and a reproduction photodetector 153 instead of the polarization beam splitter 43, the condenser lens 48, the cylindrical lens 49, and the servo photodetector 50.

Compared with the optical pickup 36, the optical pickup 136 includes a polarization beam splitter 143, a condenser lens 148, a cylindrical lens 149, and a servo photodetector 150 instead of the dichroic prism 44, the condenser lens 51, the pinhole plate 52, and the reproduction photodetector 53.

In the optical pickup 136, the reflected light beam L2 reflected from the optical disc 100 when the servo control is performed is made incident on the polarization beam splitter 143 via the object lens 47, the relay lens 46, and the quarter-wave plate 45.

The polarization beam splitter 143 reflects the reflected light beam L2 formed of the s-polarized light and makes the reflected light beam L2 incident on the condenser lens 148. The condenser lens 148 condenses the reflected light beam L2 and irradiates the reflected light beam L2 on the servo photodetector 150 via the cylindrical lens 149.

On the other hand, in the optical pickup 136, when information is reproduced from the optical disc 100, the reproduction light beam L3 generated from the optical disc 100 is made incident on the polarization beam splitter 143 via the object lens 47, the relay lens 46, and the quarter-wave plate 45.

Unlike the reflected light beam L2 formed of the s-polarized light, the reproduction light beam L3 does not have a specific polarizing direction and is unpolarized light. Therefore, when the reproduction light beam L3 is made incident on the polarization beam splitter 143, it is likely that, depending on wavelength dependency of a reflecting/transmitting surface 143S, a part of the reproduction light beam L3 is reflected.

The reproduction light beam L3 transmitted through the polarization beam splitter 143 is made incident on the dichroic prism 144. A reflecting/transmitting surface 144S of the dichroic prism 144 has wavelength selectivity and reflects light beams having wavelengths other than that of the blue light at a ratio of about 100 [%]. Therefore, the dichroic prism 144 reflects the reproduction light beam L3 on the reflecting/transmitting surface 144S at a ratio of about 100 [%] and makes the reproduction light beam L3 incident on the condenser lens 151.

The condenser lens 151 condenses the reproduction light beam L3 and irradiates the reproduction light beam L3 on the reproduction photodetector 153 via the pinhole plate 152.

On the other hand, a portion of the reproduction light beam L3 reflected on the polarization beam splitter 143 without being transmitted is made incident on the condenser lens 148. The condenser lens 148 condenses the reproduction light beam L3 and irradiates the reproduction light beam L3 on the servo photodetector 150 via the cylindrical lens 149.

Therefore, in the optical pickup 136, since the reproduction light beam L3 is irradiated on a detection area of the servo photodetector 150, it is likely that the servo control is made unstable.

When a part of the reproduction light beam L3 or the entire reproduction light beam L3 is reflected on the polarization beam splitter 143, in the reproduction light beam L3 having a small light amount generated from the optical disc 100, a light amount of the reproduction light beam L3 irradiated on the reproduction photodetector 153 decreases. Therefore, it is also likely that accuracy falls when the optical disc device 30 reproduces information recorded on the optical disc 100.

On the other hand, in the optical pickup 36 according to this embodiment, since the reproduction light beam L3 is reflected by the dichroic prism 44 at a ratio of about 100 [%], only the reflected light beam L2 is made incident on the polarization beam splitter 43.

Therefore, the servo photodetector 50 can eliminate the incidence of the reproduction light beam L3 and detect a light amount of only the reflected light beam L2. Consequently, the driving control unit 32 of the optical disc device 30 can perform stable servo control.

In the optical pickup 36 according to this embodiment, the reproduction light beam L3 is reflected by the dichroic prism 44 at a ratio of about 100 [%] and irradiated on the reproduction photodetector 53.

Therefore, the reproduction photodetector 53 can receive a light amount of substantially the entire reproduction light beam L3 having a small light amount. Consequently, the signal processing unit 33 of the optical disc device 30 can reproduce information recorded on the optical disc 100 at high accuracy.

With the configuration explained above, the optical disc 100 has the reflective films 105 that reflect a light beam adjacent to the recording layers 101 formed of the fluorescent recording material. The optical disc device 30 separates, with the dichroic prism 44 having wavelength selectivity, the reflected light beam L2 obtained from the light beam L1 irradiated and reflected on the reflective film 105 and having wavelength equivalent to that of the light beam L1 and the reproduction light beam L3 generated from the recording layer 101. Subsequently, the optical disc device 30 makes the reflected light beam L2 incident on the servo photodetector 50 and makes the reproduction light beam L3 incident on the reproduction photodetector 53. The optical disc device 30 performs the focus control of the object lens 47 on the basis of a result of detection of the reflected light beam L2 by the servo photodetector 50. consequently, the optical disc device 30 can perform the focus control on the basis of a light beam emitted from a laser diode same as a laser diode that emits a light beam for reproducing information recorded on the optical disc 100.

<2. Other embodiments>

In the above explanation of the embodiment, the optical disc device 30 records information on the optical disc 100 and reproduces the information from the optical disc 100.

However, the present invention is not limited to this. For example, the optical disc device 30 may only reproduce information from the optical disc 100 without recording information on the optical disc 100.

In the above explanation of the embodiment, the optical pickup 36 uses the different condenser lenses for the reflected light beam L2 and the reproduction light beam L3.

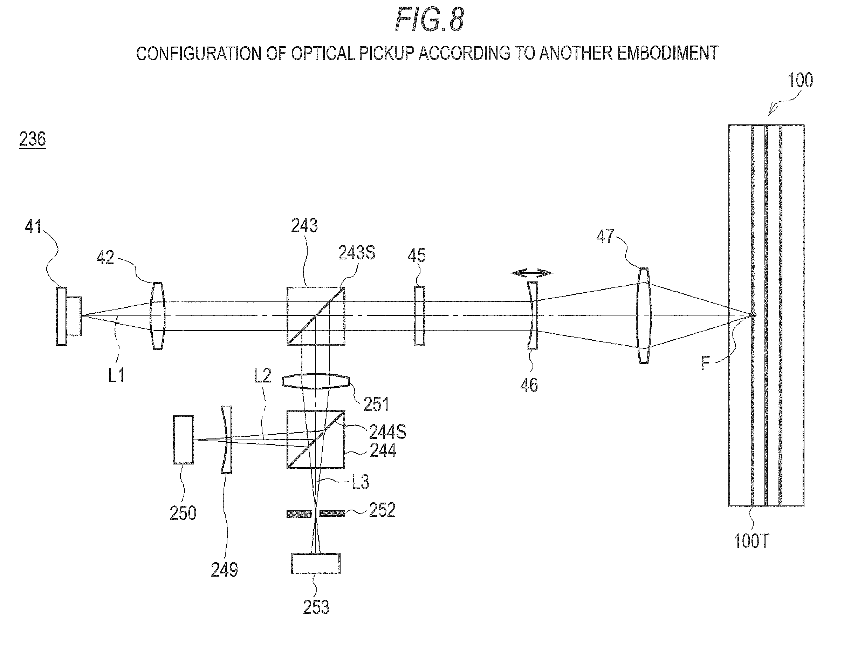

However, the present invention is not limited to this. Like an optical pickup 236 shown in Fig. 8, the same condenser lens 251 may be used for the reflected light beam L2 and the reproduction light beam L3.

In the optical pickup 236, the reflected light beam L2 and the reproduction light beam L3 reflected by a polarization beam splitter 243 are condensed by the condenser lens 251 and made incident on a dichroic prism 244.

A reflecting/transmitting surface 244S of the dichroic prism 244 reflects a light beam having wavelength of the blue light at a ratio of about 100 [%] and transmits light beams having wavelength other than that of the blue light at a ratio of about 100 [%].

Therefore, the dichroic prism 244 reflects the reflected light beam L2 formed of the blue light on the reflecting/ transmitting surface 244S and, after giving astigmatism to the reflected light beam L2 with a cylindrical lens 249, irradiates the reflected light beam L2 on a servo photodetector 250.

The dichroic prism 244 transmits the reproduction light beam L3 having wavelength other than that of the blue light through the reflecting/transmitting surface 244S and irradiates the reproduction light beam L3 on the reproduction photodetector 253 via a pinhole plate 252.

Consequently, since one condenser lens can be reduced in the optical pickup 236 compared with the optical pickup 36, it is possible to reduce the number of components.

In the above explanation of the embodiment, the reflective films 105 are formed on the boundary surfaces between the recording layers 101 and the intermediate layers 102 of the optical disc 100 to reflect an irradiated light beam.

However, the present invention is not limited to this. For example, it is also possible that the reflective films 105 are removed from the optical disc 100, the recording layers 101 are formed of a material having a refractive index higher than that of the intermediate layers 102, and a light beam is reflected according to a difference between the refractive indexes of the recording layers 101 and the intermediate layers 102.

In short, the optical disc 100 only has to be capable of reflecting, to a certain degree, the light beam L1 irradiated from the outside with a reflecting section on the boundary surface between the recording layer 101 on which the light beam is focused and the intermediate layer 102 adjacent to the recording layer 101 in a direction approaching the object lens 47.

In the above explanation of the embodiment, the reflective film that reflects a light beam at substantially fixed reflectance irrespectively of wavelength is used as the reflective film 105 of the optical disc 100.

However, the present invention is not limited to this. The reflective film 105 of the optical disc 100 may have various kinds of wavelength selectivity. In this case, for example, the reflective film 105 reflects a light beam formed of the blue laser beam having wavelength of 405 [nm] at a ratio of 1 [%] and transmits a light beam having wavelength larger than 405 [nm] at a ratio of about 100 [%].

Therefore, the optical disc device 30 can receive, with the reproduction photodetector 53, the reproduction light beam L3 generated from the recording layer 101 and having wavelength larger than that of the blue light and a small light amount without a part thereof being reflected to the substrate 104 side by the reflective film 105. Consequently, the optical disc device 30 can reproduce information recorded on the optical disc 100 at high accuracy.

In the above explanation of the embodiment, the reflective film 105 of the optical disc 100 reflects a light beam at a ratio of 1 [%].

However, the present invention is not limited to this. The reflective film 105 of the optical disc 100 may have various reflectances. The plural reflective films 105 of the optical disc 100 may respectively have different reflectances.

However, as the reflectance of the reflective film 105 is set higher, since the reproduction light beam L3 generated from the recording layer is reflected to the substrate 104 side by the reflective film 105, a light amount of the reproduction light beam L3 made incident on the reproduction photodetector 53 decreases.

Therefore, in the optical disc device 30, if the reflectance of the reflective film 105 of the optical disc 100 is too large, accuracy in reproducing information recorded in the optical disc 100 falls.

Therefore, the reflectance of the reflective film 105 of the optical disc 100 is desirable at a degree enough for enabling the optical disc device 30 to reproduce information recorded on the optical disc 100.

In the above explanation of the embodiment, the optical disc device 30 causes the laser diode 41 to emit the blue laser beam having wavelength of about 405 [nm].

However, the present invention is not limited to this. The laser diode 41 may emit light beams having various wavelengths.

In this case, if the optical disc device 30 causes the laser diode 41 to emit a light beam having wavelength smaller than 405 [nm], it is possible to reduce the size of a recording mark formed on the optical disc 100 (i.e., increase resolution) and record more information on the optical disc 100 at higher accuracy.

In the above explanation of the embodiment, the recording layer 101 of the optical disc 100 is formed of the fluorescent recording material that does not generate the reproduction light beam L3 when a recording mark is not formed and tends to generate the reproduction light beam L3 when a recording mark is formed.

However, the present invention is not limited to this. The recording layer 101 may be formed of a fluorescent recording material that generates the reproduction light beam L3 when information is not recorded and stops generating the reproduction light beam L3 when a recording mark is formed and information is recorded.

In this case, the optical disc device 30 only has to recognize, when the reproduction light beam L3 is not received by the reproduction photodetector 53, that the value "1" is recorded on the target track of the recording layer 101 and recognize, when the reproduction light beam L3 is received, that the value "0" is recorded.

In the above explanation of the embodiment, the recording layer 101 of the optical disc 100 is formed of the fluorescent recording material in which, when a light beam having high light intensity is irradiated thereon, the two-photon absorption reaction occurs as a photochemical reaction and a recording mark is formed.

However, the present invention is not limited to this. For example, the recording layer 101 may be formed of a fluorescent recording material in which, when a light beam having high light intensity is irradiated thereon, light is absorbed and temperature near a focus rises, a thermochemical reaction occurs, and a recording mark is formed.

In short, the recording layer 101 of the optical disc 100 only has to be formed of a fluorescent recording material in which, when the light beam L1 having high light intensity is irradiated thereon, various reactions occur and a recording mark is formed and, thereafter, when the light beam L1 having light intensity lower than light intensity for forming a recording mark is irradiated thereon, the reproduction light beam L3 having wavelength different from that of the light beam L1 is generated.

In the above explanation of the embodiment, the optical pickup 36 as an optical pickup includes the laser diode 41 as a light source, the object lens 47 as an object lens, the dichroic prism 44 as a wavelength selecting element, and the servo photodetector 50 as a reflected light detector.

However, the present invention is not limited to this. The optical pickup may include a light source, an object lens, a wavelength selecting element, and a reflected detector including other various circuit configurations.

In the above explanation of the embodiment, the optical disc device 30 as an optical disc device includes the laser diode 41 as a light source, the object lens 47 as an object lens, the dichroic prism 44 as a wavelength selecting element, the servo photodetector 50 as a reflected light detector, the signal processing unit 33 as a signal processing unit, and the biaxial actuator 54 as a lens moving unit.

However, the present invention is not limited to this. The optical disc device may include a light source, an object lens, a wavelength selecting element, a reflected light detector, a signal processing unit, and a lens moving unit including other various circuit configurations.

The present invention can also be applied to an optical disc device that records information such as video, sound, or various data on an optical disc and reproduces the information from the optical disc.

The present application contains subject matter related to that disclosed in Japanese Priority Patent Application JP 2009-147836 filed in the Japan Patent Office on June 22, 2009.

It should be understood by those skilled in the art that various modifications, combinations, sub-combinations and alterations may occur depending on design requirements and other factors insofar as they are within the scope of the appended claims or the equivalents thereof.

**Claims**

1. An optical pickup comprising:

    a light source that emits a light beam;
    an object lens that focuses the light beam on an optical disc having a recording layer formed of a fluorescent recording material and a reflecting section adjacent to the recording layer, the recording layer generating, according to presence or absence of a recording mark representing information, a reproduction light beam having wavelength different from that of the light beam when the light beam is irradiated thereon from the light beam, and the reflecting section reflecting the light beam;
    a wavelength selecting element that separates, from the reproduction light beam, a reflected light beam reflected by the reflecting section of the optical disc and having wavelength equivalent to that of the light beam; and
    a reflected light detector that receives the reflected light beam separated by the wavelength selecting element and generates a position detection signal, wherein

the optical pickup causes a predetermined signal processing unit to generate, on the basis of the position detection signal, a focus error signal representing deviation between the focus of the light beam and the recording layer with respect to an optical axis direction of the light beam, and

the optical pickup causes a lens moving unit to move, on the basis of the focus error signal, the object lens in a direction separating from and approaching the optical disc.

2. An optical pickup according to claim 1, further comprising a reproduction light detector that receives the reproduction light beam separated from the reflected light beam by the wavelength selecting element and generates a reproduction detection signal, wherein

the optical pickup causes the predetermined signal processing unit to reproduce, on the basis of the reproduction detection signal, information recorded on the optical disc.

3. An optical pickup according to claim 2, wherein the optical disc has a plurality of the recording layers and a plurality of the reflecting sections adjacent to the recording layers,

the object lens focuses the light beam on one reflecting section among the plural reflecting sections, and

the wavelength selecting element separates, from the reflected light beam reflected by the one reflecting section, the reproduction light beam generated by the recording layer adjacent to the one reflecting section.

4. The optical pickup according to claim 1, wherein the light source emits the light beam having intensity equal to or higher than predetermined intensity, and

the recording layer differentiates, when the light beam having intensity equal to or higher than the predetermined intensity is irradiated thereon, whether the reproduction light beam is generated and forms the recording mark.

5. The optical pickup according to claim 1, further comprising:

a polarization optical element that differentiates polarizing directions of the light beam and the reflected light beam; and

a polarization selecting element that causes the light beam and the reflected light beam respectively to travel to optical paths corresponding to the polarizing directions, wherein

the object lens returns the reflected light beam and the reproduction light beam to an optical path same as that of the light beam,

the wavelength selecting element separates, from the reproduction light beam, the reflected light beam passing through the optical path same as that of the light beam and made incident thereon and leads the reflected light beam to the optical path same as that of the light beam, and

the polarization selecting element receives incidence of the reflected light beam separated from the reproduction light beam by the wavelength selecting element and passing through the optical path same as that of the light beam, leads the reflected light beam to an optical path different from that of the light beam according to the difference between the polarizing directions of the light beam and the reflected light beam, and irradiates the reflected light beam on the reflected light detector.

6. An optical disc device comprising:

a light source that emits a light beam;

an object lens that focuses the light beam on an optical disc having a recording layer formed of a fluorescent recording material and a reflecting section adjacent to the recording layer, the recording layer generating, according to presence or absence of a recording mark representing information, a reproduction light beam having wavelength different from that of the light beam when the light beam is irradiated thereon from the light beam, and the reflecting section reflecting the light beam;

a wavelength selecting element that separates, from the reproduction light beam, a reflected light beam reflected by the reflecting section of the optical disc and having wavelength equivalent to that of the light beam;

a reflected light detector that receives the reflected light beam separated by the wavelength selecting element and generates a position detection signal;

a signal processing unit that generates, on the basis of the position detection signal, a focus error signal representing deviation between the focus of the light beam and the recording layer with respect to an optical axis direction of the light beam; and

a lens moving unit that moves, on the basis of the focus error signal, the object lens in a direction separating from and approaching the optical disc.

## FIG.1

CONFIGURATION OF OPTICAL DISK DEVICE EMPLOYING OPTICAL
DISK IN WHICH FLUORESCENT RECORDING MATERIAL IS USED

CONFIGURATION OF OPTICAL DISK HAVING MULTIPLE RECORDING LAYERS

*FIG.2A*

*FIG.2B*

CONFIGURATION OF OPTICAL DISK

FIG.3A

FIG.3B

# FIG.4
## OVERALL CONFIGURATION OF OPTICAL DISK DEVICE

EP 2 267 704 A1

# FIG.5

## CONFIGURATION (1) OF OPTICAL PICKUP

EP 2 267 704 A1

# FIG.6

## CONFIGURATION OF DETECTION AREA IN PHOTODETECTOR

a1

50

50A   50D

50B   50C

## FIG.7
### CONFIGURATION (2) OF OPTICAL PICKUP

EP 2 267 704 A1

# FIG.8

### CONFIGURATION OF OPTICAL PICKUP ACCORDING TO ANOTHER EMBODIMENT

Europäisches
Patentamt
European
Patent Office
Office européen
des brevets

# EUROPEAN SEARCH REPORT

Application Number

EP 10 16 6056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/23647 A1 (OMD DEVICES L L C [US]; ORBACH ZEEV [IL]; GLUSHKO BORIS [IL]) 14 May 1999 (1999-05-14) * page 17 - page 18; figures 8,9 * * the whole document * | 1-6 | INV. G11B7/09 G11B7/135 ADD. G11B7/24 |
| A | WALKER, EDWIN P ET AL: "Servo Error Signal Generation for 2-photon recorded monolithic multilayer optical data storage" PROCEEDINGS OF SPIE, vol. 4090, 2000, pages 179-184, XP007915090 ISSN: 0227-786X * the whole document * | 1-6 | |
| A | WO 98/25262 A1 (OMD OPTICAL MEMORY DEVICES LTD [IL]; LEVICH EUGENE BORIS [US]; GLUSHKO) 11 June 1998 (1998-06-11) * figure 2 * * the whole document * | 1-6 | |
| A | WO 2008/081319 A2 (MEMPILE INC [US]; SALOMON YAIR [IL]) 10 July 2008 (2008-07-10) * the whole document * | 1-6 | TECHNICAL FIELDS SEARCHED (IPC) G11B |

The present search report has been drawn up for all claims

| Place of search | Date of completion of the search | Examiner |
|---|---|---|
| The Hague | 30 September 2010 | Holubov, Carol |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**

EP 10 16 6056

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2010

| Patent document cited in search report | | Publication date | Patent family member(s) | | | Publication date |
|---|---|---|---|---|---|---|
| WO 9923647 | A1 | 14-05-1999 | AU | 1050599 | A | 24-05-1999 |
| | | | DE | 69824440 | D1 | 15-07-2004 |
| | | | DE | 69824440 | T2 | 23-06-2005 |
| | | | EP | 1027701 | A1 | 16-08-2000 |
| | | | JP | 2001522118 | T | 13-11-2001 |
| WO 9825262 | A1 | 11-06-1998 | AU | 5516598 | A | 29-06-1998 |
| | | | EP | 0943141 | A1 | 22-09-1999 |
| | | | JP | 2001505701 | T | 24-04-2001 |
| WO 2008081319 | A2 | 10-07-2008 | US | 2010002555 | A1 | 07-01-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009147836 A

**Non-patent literature cited in the description**

- **Y. Kawata et al.** Three-dimensional optical data storage using three-dimensional optics. *Optical Engineering,* 2001, vol. 40, 2247-2254